# EUROPEAN PATENT APPLICATION

(11) **EP 4 832 089 A1**
(43) Date of publication of application: **28.10.2026**
(21) Application number: 24908306.4
(22) Date of filing: 17.12.2024
(51) Int. Cl.: H01M 4/36, H01M 4/505, H01M 4/525, C01G 53/00, H01M 4/131, H01M 10/052, H01M 4/02

(54) **CATHODE ACTIVE MATERIAL FOR LITHIUM SECONDARY BATTERY, AND METHOD FOR MANUFACTURING SAME**

(30) Priority: 18.12.2023 KR 20230185250
(71) Applicant: POSCO Holdings Inc., Pohang-si, Gyeongsangbuk-do 37859 (KR)
(72) Inventor: CHOI, Sol, Pohang-si, Gyeongsangbuk-do 37859 (KR); YU, Byongyong, Pohang-si, Gyeongsangbuk-do 37859 (KR); NAM, Sang Cheol, Pohang-si, Gyeongsangbuk-do 37859 (KR)
(74) Representative: Pfenning, Meinig & Partner mbB
(86) International application number: PCT/KR2024/097059
(87) International publication number: WO 2025/136024

(57) **Abstract**

A positive electrode active material for a lithium secondary battery according to one embodiment of the present invention may include a lithium metal oxide including a core portion including manganese, nickel, and cobalt; and a boron-containing coating layer positioned on an outer surface of the core portion, and may be represented by the following Chemical Formula 1.

[Chemical Formula 1] Li₁₊ₓNiₐCo_{b}Mn_{c}B_{d}MₑO_{2-y}D_{y}

In Chemical Formula 1, 0.1≤x≤0.15, 0.20≤a≤0.35, 0.05≤b≤0.15, 0.4≤c≤0.55, 0≤d≤0.1, 0.015≤y≤0.05, x+a+b+c+d+e=1, M is one or more selected from Al, Ti, Nb, Ta, W, Zr, Y, Mg, Sc, Si, V, Fe, Mo, Ce, Hf, La, Sr, Sn, Sb, Zn, Cu, Ge, Mo, Ru, and Ir, and D is one or more selected from F, Cl, Br, and I.

## Description

### [TECHNICAL FIELD]

The present invention relates to a lithium-rich manganese oxide-based positive electrode active material and a method for manufacturing the same.

### [BACKGROUND ART]

Recently, with explosive demand for electric vehicles and demand for increased driving range, development of lithium secondary batteries having high capacity and high energy density to meet such demand is being actively conducted worldwide.

The lithium secondary battery is manufactured by using, as positive electrode and negative electrode active materials, materials capable of reversible intercalation/deintercalation of lithium ions, and filling an organic electrolyte solution or polymer electrolyte between the positive electrode and the negative electrode.

Representative materials used as positive electrode active materials of lithium secondary batteries include lithium composite oxides. The lithium composite oxides include oxides in which Ni, Co, Mn, Al, or the like are combined.

Commercialized lithium composite oxides such as nickel-cobalt-manganese (NCM) include cobalt as an essential element in order to achieve both electrochemical characteristics and stability, which are in a trade-off relationship.

However, with the recent rapid growth of the lithium secondary battery market, the cost of raw materials is also increasing, and thus another issue of cost reduction has arisen. In particular, positive electrode active materials account for the largest cost proportion in lithium secondary batteries, and among them, cobalt, which is an essential element of lithium composite oxides such as nickel-cobalt-manganese (NCM), is not only the most expensive metal, but also has relatively high supply instability. Accordingly, market demand for positive electrode active materials having reduced costs by adopting a cobalt-free composition is increasing.

Lithium-rich layered lithium transition metal oxides have a very high capacity of 240 mAh/g or more and have attracted attention as next-generation positive electrode active material candidates, and research thereon has recently been actively conducted.

A lithium-rich layered lithium metal oxide has excellent cost competitiveness because, compared with a general NCM positive electrode active material, it has a low Ni content, which has a high raw material cost, and a relatively high Mn content, which is inexpensive. In addition, charge/discharge proceeds using not only redox of transition metals but also redox of oxygen, resulting in high capacity. In order to exhibit ideal capacity and lifespan performance, the oxidation state of Ni should be maintained at +2 and the oxidation state of Mn should be maintained at +4. However, during initial charging, some irreversible oxygen oxidation/reduction reaction generates Mn³⁺ on the particle surface, thereby inducing Mn elution or causing problems such as voltage decrease and lifespan deterioration due to side reactions with an electrolyte solution. Accordingly, by forming LiBO₂ having low ionic resistance on the particle surface through boron surface coating, side reactions can be suppressed, and the formation of Mn³⁺ caused by the irreversible oxygen oxidation/reduction reaction during initial charging can be suppressed, thereby preventing voltage decrease and lifespan deterioration.

As described above, during boron coating, the average oxidation state of Ni is increased, so that formation of Mn³⁺ due to some irreversible oxygen oxidation/reduction reaction during initial charging is suppressed, and Ni²⁺ and Mn⁴⁺ are maintained from the second charge/discharge, thereby exhibiting ideal charge/discharge efficiency, capacity, and lifespan performance. In addition, formation of a boron compound having high ionic conductivity suppresses side reactions with an electrolyte solution without interfering with movement of lithium ions during charge/discharge at the particle surface. However, since the degree of irreversible reaction of oxygen varies depending on the composition of the lithium-rich layered lithium metal oxide, electrochemical performance may significantly vary depending on the boron coating amount, and therefore optimization of the coating amount is important.

### [DETAILED DESCRIPTION OF THE INVENTION]

### [Technical Problem]

One object of the present invention is to provide a lithium-rich manganese-based positive electrode active material having both improved capacity and cycle characteristics, and a lithium secondary battery including the same.

### [Technical Solution]

A positive electrode active material for a lithium secondary battery according to one embodiment of the present invention may include a lithium metal oxide including a core portion including manganese, nickel, and cobalt; and a boron-containing coating layer positioned on an outer surface of the core portion, and may be represented by the following Chemical Formula 1.

[Chemical Formula 1] Li₁₊ₓNiₐCo_{b}Mn_{c}B_{d}MₑO_{2-y}D_{y}

In Chemical Formula 1, 0.1≤x≤0.15, 0.20≤a≤0.35, 0.05≤b≤0.15, 0.4≤c≤0.55, 0≤d≤0.1, 0.015≤y≤0.05, x+a+b+c+d+e=1, M is one or more selected from Al, Ti, Nb, Ta, W, Zr, Y, Mg, Sc, Si, V, Fe, Mo, Ce, Hf, La, Sr, Sn, Sb, Zn, Cu, Ge, Mo, Ru, and Ir, and D is one or more selected from F, Cl, Br, and I.

The lithium metal oxide may include boron in an amount of 0.05 wt% to 2.0 wt% based on the total weight of the lithium metal oxide.

The lithium metal oxide may include boron in an amount of 0.05 wt% to 2.0 wt% based on the total weight of the lithium metal oxide.

The coating layer may include lithium boron oxide (LiBO₂).

In XPS (X-ray Photoelectron Spectroscopy), an amount of boron contained in a thickness region from an outermost surface of the surface of the lithium metal oxide to a depth of 10 nm may be 85% or more of the total boron content in the lithium metal oxide.

A thickness of the coating layer may be 1 nm to 100 nm.

The lithium metal oxide may have a crystallite size analyzed by XRD analysis of 40 nm to 70 nm.

The positive electrode active material may have an average particle diameter (D50) of 2.0 µm to 15.0 µm.

A method for manufacturing a positive electrode active material for a lithium secondary battery according to another embodiment of the present invention may include preparing a metal precursor including manganese, nickel, and cobalt; dry-mixing the metal precursor, a lithium raw material, and a halogen raw material and then calcining the same to form a lithium metal oxide; and mixing the lithium metal oxide and a boron raw material and heat-treating the same. The heat treatment may be performed at a temperature of 250°C to 350°C.

In the step of mixing the lithium metal oxide and the boron raw material and heat-treating the same, the heat treatment may be performed for 1 hour to 10 hours.

The step of mixing the lithium metal oxide and the boron raw material and heat-treating the same may be performed in dry air, in an air atmosphere from which carbon dioxide has been removed, or in an oxygen atmosphere.

In the step of dry-mixing the metal precursor, the lithium raw material, and the halogen raw material and then calcining the same to form the lithium metal oxide, the calcination may be performed at a temperature of 700°C to 950°C.

Another embodiment of the present invention provides a positive electrode for a lithium secondary battery, including a current collector; and a positive electrode active material layer positioned on at least one surface of the current collector and including the positive electrode active material for a lithium secondary battery.

Still another embodiment of the present invention provides a lithium secondary battery including the positive electrode for a lithium secondary battery.

### [Advantageous Effects]

The positive electrode active material according to one embodiment of the present invention can implement a lithium secondary battery having excellent discharge capacity and cycle performance.

### [BRIEF DESCRIPTION OF THE DRAWINGS]

FIG. 1 is a graph showing SEM analysis results of a positive electrode active material according to Example 1.
FIG. 2 is a graph showing SEM analysis results of a positive electrode active material according to Comparative Example 1.
FIG. 3 is a graph showing XPS analysis results of positive electrode active materials according to Examples and Comparative Examples.

### [BEST MODE FOR CARRYING OUT THE INVENTION]

In the present specification, terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material for Lithium Secondary Battery

A positive electrode active material for a lithium secondary battery according to one embodiment of the present invention may include a lithium metal oxide including a core portion including manganese, nickel, and cobalt; and a boron-containing coating layer positioned on an outer surface of the core portion, and may include a lithium metal oxide represented by the following Chemical Formula 1.

[Chemical Formula 1] Li₁₊ₓNiₐCo_{b}Mn_{c}B_{d}MₑO_{2-y}D_{y}

In Chemical Formula 1, 0.1≤x≤0.15, 0.25≤a≤0.35, 0.05≤b≤0.15, 0.45≤c≤0.55, 0≤d≤0.1, 0.01≤y≤0.1, x+a+b+c+d+e=1, M is one or more selected from Al, Ti, Nb, Ta, W, Zr, Y, Mg, Sc, Si, V, Fe, Mo, Ce, Hf, La, Sr, Sn, Sb, Zn, Cu, Ge, Mo, Ru, and Ir, and D is one or more selected from F, Cl, Br, and I.

The lithium metal oxide may include boron in an amount of 0.2 wt% to 2.0 wt% based on the total weight of the lithium metal oxide, and specifically may include boron in an amount of 0.5 wt% to 2.0 wt%, or 1.0 wt% to 1.5 wt%.

In addition, in XPS (X-ray Photoelectron Spectroscopy), the amount of boron contained in a region from the outermost surface of the surface of the lithium metal oxide to a depth of 10 nm may be 50% or more, specifically 85% or more, 90% or more, or 100%, of the total boron content in the lithium metal oxide.

By including boron within the above range, the average oxidation state of Ni included in the positive electrode active material can be increased, thereby suppressing formation of Mn³⁺ due to some irreversible oxygen oxidation/reduction reaction during initial charging, and Ni²⁺ and Mn⁴⁺ can be maintained from the second charge/discharge, thereby preventing deterioration of charge/discharge efficiency, capacity, and lifespan performance. In addition, by forming a boron-containing coating layer having high ionic conductivity on the surface of the lithium metal oxide, there is an advantage in that deterioration of electrochemical performance of the battery can be prevented by suppressing side reactions with an electrolyte solution without interfering with the movement of lithium ions on the surface of the lithium metal oxide particles during charge/discharge, which is preferable. When the boron content is less than the above range, it is difficult to achieve the desired effect according to addition of boron, and when the boron content exceeds the above range, a problem of capacity deterioration may occur.

The lithium metal oxide has a low nickel content, but may involve not only oxidation/reduction reactions of transition metals, but also oxidation/reduction reactions of anions (oxygen) during battery operation. In addition, excessive lithium may exist not only in the lithium layer but also in the transition metal layer, and thus insertion and deintercalation efficiency of lithium ions may be increased. Accordingly, the initial discharge capacity is 240 mAh/g or more, and capacity characteristics can be remarkably improved compared with a positive electrode material having a conventional NCM composition. In addition, because the contents of nickel and cobalt, which are relatively expensive, can be reduced and the content of manganese, which is inexpensive, can be increased, economic feasibility is excellent.

However, compared with a conventional positive electrode material, the lithium metal oxide having a lithium- and manganese-rich composition utilizes an oxidation/reduction reaction of oxygen in addition to oxidation/reduction of transition metals due to a high lithium content in the structure and a relatively low transition metal ratio. Since such an oxidation/reduction reaction of oxygen is driven at a high voltage during first charging, generation of oxygen gas is accelerated during subsequent cycles, structural stability deteriorates, and lifespan characteristics deteriorate.

Accordingly, in the lithium metal oxide according to the present invention, a portion of oxygen sites is substituted with a halogen element. As the halogen element is substituted into the lithium metal oxide, a calcination temperature for forming the lithium metal oxide may be reduced by about 100°C to 200°C, and an irreversible oxygen oxidation/reduction reaction during charge/discharge, which generally occurs in lithium- and manganese-rich oxides, may be suppressed, thereby improving lifespan characteristics.

The halogen element may be F, Cl, Br, I, or a combination thereof, and more specifically may be F.

However, in a lithium- and manganese-rich oxide not containing a halogen element, oxygen, which is the only anion in the composition, exists with an oxidation number of -2. However, when a halogen element having an oxidation number of -1 is substituted, oxidation numbers of nickel and manganese may change. A change in oxidation numbers of nickel and manganese may cause structural instability of the active material, and as a result, may cause a problem of deterioration of lifespan characteristics.

In addition, a molar ratio of the halogen element to the lithium metal oxide may be 0.015 to 0.05. When the molar ratio of the halogen element is too small, the above-described effect of improving lifespan characteristics according to halogen element doping may be insignificant. When the molar ratio of the halogen element is too large, the change in oxidation numbers of nickel and manganese may occur too greatly, and lifespan characteristics may rather deteriorate. In addition, when the molar ratio of the halogen element satisfies the above range, average oxidation numbers of nickel, cobalt, and manganese can be more appropriately implemented within the ranges according to the present invention.

In the positive electrode active material according to one embodiment of the present invention, a molar ratio of lithium to the lithium metal oxide may be 1.05 to 1.20, and more specifically 1.10 to 1.18. When the molar ratio of lithium is too small, the average oxidation number of manganese decreases, structural stability of the active material is impaired, and capacity and lifespan characteristics may deteriorate. When the molar ratio of lithium is too large, the average oxidation number of nickel increases, structural stability of the active material is impaired, and capacity and lifespan characteristics may deteriorate.

In the positive electrode active material according to one embodiment of the present invention, a molar ratio (Ni/Me) of nickel (Ni) to metals (Me) including lithium in the lithium metal oxide may be 0.2 to 0.3, and more specifically 0.1 to 0.2. When the molar ratio of nickel is too small, the amount of oxidation/reduction of nickel during charge/discharge, which is involved in capacity expression, is limited, and capacity may deteriorate. When the molar ratio of nickel is too large, the average oxidation number of manganese decreases, structural stability of the active material is impaired, and capacity and lifespan characteristics may deteriorate.

In the positive electrode active material according to one embodiment of the present invention, a molar ratio of cobalt (Co) to all metals (Me) including lithium in the lithium metal oxide may be 0.001 to 0.1, and more specifically 0.02 to 0.1, or 0.02 to 0.08. When the molar ratio of cobalt is too small, structural stability of the active material is impaired, and capacity and lifespan characteristics may deteriorate. However, when the molar ratio of cobalt, which does not undergo an oxidation/reduction reaction during charge/discharge, is too large, capacity may deteriorate.

In the positive electrode active material according to one embodiment of the present invention, a molar ratio (Mn/Me) of manganese (Mn) to all metals (Me) including lithium in the lithium metal oxide may be 0.2 to 0.30, and more specifically 0.22 to 0.28, or 0.24 to 0.26. When the molar ratio of manganese is too small, capacity due to oxidation of oxygen during initial charging is limited, and capacity may deteriorate. When the molar ratio of manganese is too large, a capacity proportion due to oxidation of oxygen during initial charging increases, causing an irreversible oxygen oxidation/reduction reaction, and lifespan characteristics may deteriorate.

In the positive electrode active material according to one embodiment of the present invention, the coating layer may include lithium boron oxide.

In the positive electrode active material according to one embodiment of the present invention, in XPS (X-ray Photoelectron Spectroscopy), a ratio (Ii/Io) of an intensity of a peak B1s appearing between 192.0 and 193.0 eV at a position 10 nm deep from the surface toward the inner center of the lithium metal oxide to an intensity (Io) of a peak B1s appearing between 192.0 and 193.0 eV at the surface of the lithium metal oxide may be 0.5 to 1.0.

When the intensity ratio (Ii/Io) is within the above range, a boron-containing coating layer is effectively formed on the surface of the lithium metal oxide, which is advantageous for improving electrochemical performance of the positive electrode active material.

In the positive electrode active material according to one embodiment of the present invention, the coating layer may have a thickness of 1 nm to 100 nm.

When the thickness of the coating layer is within the above range, cycle life can be improved while maintaining excellent charge/discharge capacity of the lithium secondary battery, which is preferable.

The positive electrode active material according to one embodiment of the present invention may have an average crystallite size obtained by XRD analysis of 40 nm to 100 nm, and specifically 50 nm to 70 nm.

In the present invention, the crystallite size may be calculated by the following Scherrer equation, Equation 1. $τ = \left(Kλ\right) / \left(βcoaθ\right)$ (1)

In Equation 1, K is a shape factor, λ is an X-ray wavelength, β is a full width at half maximum, and θ is a Bragg angle. In the present invention, a shape factor of 1.0 is generally used, but may vary depending on crystallites.

When the crystallite size according to XRD analysis is within the above range, the lithium metal oxide forms a stable structure and can exhibit excellent cycle performance while maintaining high capacity, which is preferable.

The positive electrode active material according to one embodiment of the present invention may be secondary particles formed by aggregation of a plurality of primary particles.

The positive electrode active material according to one embodiment of the present invention may have an average particle diameter (D50) of 2.0 µm to 15.0 µm, and specifically 9.0 µm to 13.0 µm.

When the average particle diameter of the positive electrode active material for a lithium secondary battery satisfies the above range, volume density of a battery to which the same is applied can be improved, which is preferable.

In the present invention, "average particle diameter (D50)" means an average value of particle diameters of 3 to 10 continuously positioned particles observed in an SEM image. Meanwhile, the particle diameter may be calculated as an average value of the longest length (major axis) in a cross section of a particle observed on an SEM image and the longest length (minor axis) among lengths perpendicular to the major axis.

Meanwhile, in the present specification, "secondary particle" means an aggregate in which several tens to several hundreds of primary particles are aggregated by physical or chemical bonding between the primary particles even without an intentional aggregation or assembly process for the primary particles, that is, a secondary structure. The "primary particle" means a minimum particle unit distinguished as one lump when a positive electrode active material is observed through a scanning electron microscope (SEM), and may be composed of one crystal grain or may be composed of a plurality of crystal grains. In the present specification, "crystal grain" means a distinguishable region in which atoms in a primary particle form a lattice structure in a predetermined direction.

### 2. Method for Manufacturing Positive Electrode Active Material

A method for manufacturing a positive electrode active material according to another embodiment of the present invention may include preparing a metal precursor including manganese, nickel, and cobalt; dry-mixing the metal precursor, a lithium raw material, and a halogen raw material and then calcining the same to form a lithium metal oxide; and mixing the lithium metal oxide and a boron raw material and heat-treating the same.

Hereinafter, the method for manufacturing a positive electrode active material of the present invention will be described in detail.

First, a step of preparing a metal precursor including manganese, nickel, and cobalt is performed.

The metal precursor may be manufactured, for example, by adding a complexing agent-containing solution and a pH adjusting agent-containing solution to a metal-containing solution including a nickel raw material, a manganese raw material, and a cobalt raw material, thereby performing a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, and the cobalt raw material to a solvent, specifically water, or a mixture of water and an organic solvent uniformly miscible with water, for example, alcohol or the like.

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water, for example, alcohol or the like, may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water, for example, alcohol or the like, may be used as a solvent. At this time, the pH adjusting agent-containing solution may be added in an amount such that the pH of the reaction solution becomes 10 to 13.

The coprecipitation reaction may be performed under an inert atmosphere such as nitrogen or argon, may be performed at a temperature of 30°C to 70°C, and may be performed at a pH of 10 to 13.

By the above process, particles of nickel-manganese-cobalt hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, and manganese in the precursor may be controlled by controlling the concentrations of the nickel raw material, the cobalt raw material, and the manganese raw material. That is, the concentrations of the nickel raw material, the cobalt raw material, and the manganese raw material may be controlled such that the molar ratios of nickel, cobalt, and manganese in the lithium metal oxide, which is the final product, are within the ranges according to the present invention.

Next, a step of dry-mixing the metal precursor, the lithium raw material, and the halogen raw material and then calcining the same to form the lithium metal oxide is performed.

The metal precursor, the lithium raw material, and the halogen raw material may be appropriately mixed to satisfy the desired composition range of the positive electrode active material of the present invention.

In addition, the lithium raw material may be a solid raw material, and a lithium-containing sulfate, nitrate, acetate, carbonate, oxalate, citrate, halide, hydroxide, or oxyhydroxide may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The halogen raw material may be lithium fluoride (LiF), polytetrafluoroethylene (PTFE), or a combination thereof, but is not necessarily limited thereto.

The calcination may be performed at a temperature of 700°C to 950°C. When the calcination temperature is too low, uniform crystallinity may not be secured, and capacity and lifespan characteristics may deteriorate. When the calcination temperature is too high, ionic resistance in positive electrode particles may increase, and output characteristics may deteriorate.

The calcination may be performed for 1 hour to 20 hours, or for 5 hours to 15 hours. When the calcination time is too short, uniform crystallinity may not be secured, and capacity and lifespan characteristics may deteriorate. When the calcination time is too long, process costs may increase.

The calcination may be performed in dry air, in an air atmosphere from which carbon dioxide has been removed, or in an oxygen atmosphere. Accordingly, there is an advantage of suppressing side reactions occurring during the drying process.

Meanwhile, a doping raw material may be further mixed during the mixing. As the doping raw material, one or more of doping elements Ti, Nb, Ta, Zr, B, Y, Mg, Sc, Si, V, Fe, Mo, Ce, Hf, La, Sr, Sn, Sb, Zn, Cu, Ge, Mo, Ru, and Ir may be further mixed. The type and mixed amount of the doping raw material may be adjusted according to the desired composition of the positive electrode active material of the present invention.

Subsequently, a step of mixing the lithium metal oxide formed in the calcination process with a boron raw material and heat-treating the same may be performed.

The lithium metal oxide and the boron raw material may be appropriately mixed to satisfy the desired composition range of the positive electrode active material of the present invention.

The heat treatment temperature may be 200°C to 400°C, and specifically 250°C to 350°C.

Meanwhile, the heat treatment time may be 1 hour to 10 hours, and specifically 2 hours to 7 hours.

When the heat treatment temperature is less than the above temperature range or the heat treatment time is less than the above time range, boron cannot properly form an oxide, and thus it is difficult to obtain the desired effect of improving performance. When the heat treatment temperature exceeds the above temperature range or the heat treatment time exceeds the above time range, boron excessively penetrates into the positive electrode active material, and the coating layer cannot be effectively formed, which may cause a problem in that battery performance deteriorates.

The heat treatment may be performed in dry air or in an air atmosphere from which carbon dioxide has been removed. By performing heat treatment in the above atmosphere, there may be an advantage of suppressing generation of surface impurities caused by reaction with moisture or carbon dioxide.

The heat treatment may be performed in an air atmosphere or an oxygen atmosphere.

Thereafter, a step of disintegrating the obtained metal oxide may be further performed.

The disintegration may be performed after cooling the metal oxide to 50°C to 200°C. When cooling to the above cooling temperature, reaction between external moisture and the calcined product can be suppressed, and an increase in residual lithium can be suppressed.

The disintegration may be performed by a method commonly performed in the art.

The disintegration may be performed, for example, using a rotor mill, a ball mill, a pin mill, a jet mill, a bead mill, or a roll mill, but is not limited thereto.

The positive electrode active material for a lithium secondary battery obtained through the manufacturing method has been described in detail above, and thus description thereof is omitted here.

### 3. Positive Electrode

Another embodiment of the present invention provides a positive electrode including a current collector and a positive electrode active material layer positioned on at least one surface of the current collector and including the above-described positive electrode active material layer.

The characteristics of the positive electrode active material constituting the positive electrode active material layer are the same as described above. Therefore, a detailed description of the positive electrode active material will be omitted.

The current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 µm to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

Meanwhile, the positive electrode active material layer may include a binder and a conductive material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

In the present invention, the structure and manufacturing method of the positive electrode are not limited.

### 4. Lithium Secondary Battery

Still another embodiment of the present invention provides a lithium secondary battery including the positive electrode.

Specifically, the lithium secondary battery may include a positive electrode, a negative electrode disposed to face the positive electrode, a separator interposed between the positive electrode and the negative electrode, and an electrolyte, and the positive electrode is the same as described above. In addition, the lithium secondary battery may optionally further include a battery case accommodating an electrode assembly including the positive electrode, the negative electrode, and the separator, and a sealing member sealing the battery case.

In the lithium secondary battery, the negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including the negative electrode active material and optionally including the binder and the conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch- based carbon fibers, meso-carbon microbeads, mesophase pitches, and high-temperature calcined carbon such as petroleum or coal tar pitch-derived cokes.

The binder and the conductive material may be the same as those described above for the positive electrode.

Next, depending on the type of lithium secondary battery, a separator may be present between the positive electrode and the negative electrode. As such a separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

In addition, in the lithium secondary battery, the electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The concentration of the lithium salt is preferably used within a range of 0.1 to 2.0 M. When the concentration of the lithium salt is within the above range, the electrolyte has appropriate conductivity and viscosity, and thus excellent electrolyte performance can be exhibited and lithium ions can effectively move.

In the present invention, the structure and manufacturing method of the battery are not limited.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

### [MODE FOR CARRYING OUT THE INVENTION]

Hereinafter, embodiments of the present invention will be described in more detail through Examples. However, the following Examples are only preferred embodiments of the present invention, and the present invention is not limited by the following Examples.

### (Manufacture of Positive Electrode Active Material)

### Example 1

### (Preparation of Metal Precursor)

A metal precursor having a composition of Ni_{0.33}Co_{0.09}Mn_{0.58}(OH)₂ was prepared.

### (Calcination)

LiOH·H₂O in an amount such that the molar ratio of lithium to all metals in the metal precursor was 1.12, LiF with an amount adjusted such that the molar ratio of F to the lithium metal oxide was 0.05, and the metal precursor were mixed, and then calcined at 750°C for 10 hours under a dry air atmosphere to manufacture a lithium metal oxide having a composition of Li₁.₁₂Ni₀.₃₃Co₀.₀₉Mn₀.₅₈O₁.₉₅F₀.₀₅.

### (Formation of Coating Layer)

The manufactured lithium metal oxide and H₃BO₃ were mixed and heat-treated at 300°C for 6 hours under a dry air atmosphere to manufacture a positive electrode active material including a boron-containing coating layer.

At this time, H₃BO₃ was mixed such that boron was contained in an amount of 1000 ppm based on the total weight of the final positive electrode active material.

### Example 2, Comparative Examples 1 to 5

Positive electrode active materials were manufactured in the same manner as in Example 1, except that the boron content was varied based on the total weight of the final positive electrode active material.

Compositions of the positive electrode active materials manufactured according to Example 2 and Comparative Examples 1 to 5 are shown in Table 1 below.

**[Table 1]**

| | B Content (ppm) | F Molar Ratio (y) | Li Molar Ratio (1+x) | Ni Molar Ratio (a) | Co Molar Ratio (b) | Mn Molar Ratio (c) |
|---|---|---|---|---|---|---|
| Example 1 | 1,000 | 0.05 | 1.12 | 0.29 | 0.08 | 0.51 |
| Example 2 | 1,500 | 0.05 | 1.12 | 0.29 | 0.08 | 0.51 |
| Comparative Example 1 | 0 | 0.05 | 1.12 | 0.29 | 0.08 | 0.51 |
| Comparative Example 2 | 100 | 0.05 | 1.12 | 0.29 | 0.08 | 0.51 |
| Comparative Example 3 | 300 | 0.05 | 1.12 | 0.29 | 0.08 | 0.51 |
| Comparative Example 4 | 2,000 | 0.05 | 1.09 | 0.29 | 0.08 | 0.51 |
| Comparative Example 5 | 3,000 | 0.05 | 1.14 | 0.29 | 0.08 | 0.51 |
| Comparative Example 6 | 5,000 | 0.05 | 1.12 | 0.29 | 0.08 | 0.51 |
| Comparative Example 7 | 10,000 | 0.05 | 1.12 | 0.29 | 0.08 | 0.51 |

### (Manufacture of Lithium Secondary Battery)

A slurry for manufacturing an electrode plate was prepared by mixing the manufactured positive electrode active material, a conductive material (carbon black, Denka black), and a binder (PVDF, KF1100) at 92.5:3.5:4 wt%, and adding NMP (N-methyl-2-pyrrolidone) to adjust viscosity such that a solid content was about 30%. The manufactured slurry was coated on a 15 µm-thick Al foil using a doctor blade, and then dried and rolled. The electrode loading amount was 14.6 mg/cm², and the rolling density (25°C, 20 kN) was 3.1 g/cm³.

As the electrolyte solution, an electrolyte solution obtained by adding 3.0 vol% VC based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo metal).

### Evaluation Example 1: SEM Image of Positive Electrode Active Material

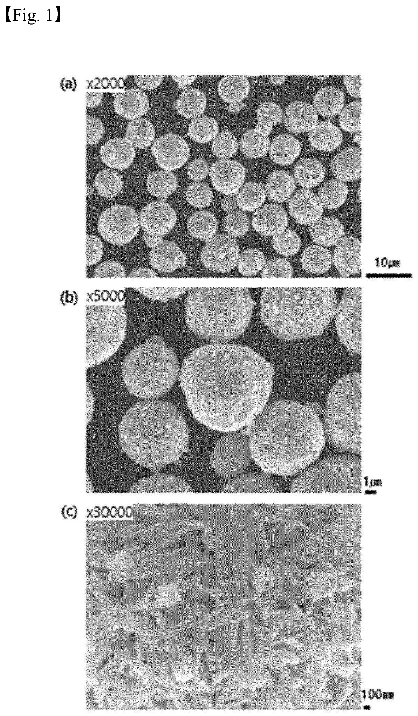

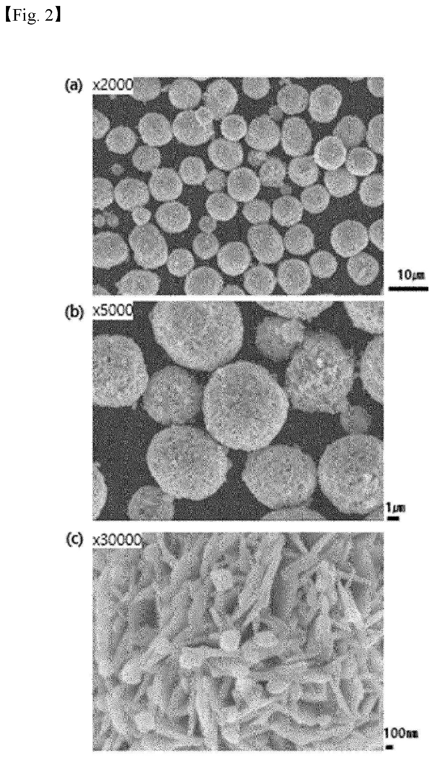

SEM (scanning electron microscope) images of the positive electrode active materials manufactured according to Example 1 and Comparative Example 1 were observed, and are shown in FIGS. 1 and 2.

Referring to FIG. 1, it was confirmed that the positive electrode active material according to the present invention was a secondary particle formed by aggregation of a plurality of primary particles.

In addition, referring to FIGS. 1 and 2, in the case of Example 1, when boron coating was performed, it was confirmed that particle-to-particle contact was better achieved in the primary particle shape. This is considered to be advantageous for improving output characteristics of the battery.

### Evaluation Example 2: XPS Analysis of Positive Electrode Active Material

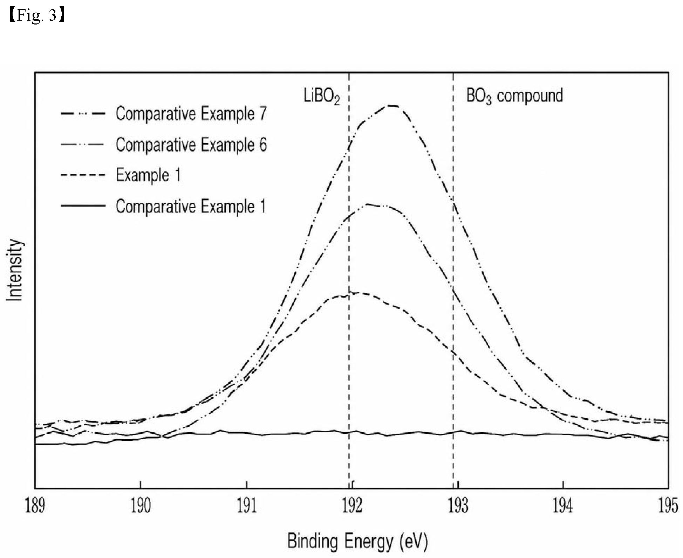

XPS analysis was performed on the positive electrode active materials manufactured according to Example 1 and Comparative Example 1, and the results are shown in FIG. 3.

X-ray Photoelectron Spectroscopy (XPS) is a method for analyzing constituent elements of a sample and electronic states thereof by measuring energy of photoelectrons generated by irradiating X-rays onto a sample, particularly the sample surface. In particular, XPS can be used not only for qualitative analysis and quantitative analysis of elements present in several nm of the surface, but also for analyzing a chemical bonding state that determines characteristics of the sample.

The manufactured positive electrode active material was measured using XPS (Kratos product, Axis-NOVA X-ray source Monochromated-Al-Kα (1486.6 eV); measurement depth: 10 nm).

In addition, through the XPS analysis results, types of boron-containing compounds included in the positive electrode active material and boron contents and ratios according to each compound type were calculated and are shown in Table 2 below.

In Table 2 below, B_LiBO₂ is a B content included in LiBO₂ (based on weight), B_BO₃ is a B content included in BO₃ (based on weight), and B_Total is a B content included in the positive electrode active material (based on weight).

**[Table 2]**

| | B Content (ppm) | XPS Analysis Results from Outermost Surface to Depth of 10 nm | | |
|---|---|---|---|---|
| | | Content % of B in LiBO₂ relative to Total B (B_LiBO₂/B_Total) | Content % of B in BO₃ relative to Total B (B_BO₃/B_Total) | Content % of B in BO₃ relative to B in LiBO₂ (B_LiBO₂/B_BO₃) |
| Example 1 | 1,000 | 100 | 0 | 0 |
| Example 2 | 1,500 | 100 | 0 | 0 |
| Comparative Example 1 | 0 | - | - | - |
| Comparative Example 2 | 100 | 100 | 0 | 0 |
| Comparative Example 3 | 300 | 100 | 0 | 0 |
| Comparative Example 4 | 2,000 | 89.5% | 10.5% | 11.7% |
| Comparative Example 5 | 3,000 | 60.1% | 39.9% | 20.2% |
| Comparative Example 6 | 5,000 | 31.4% | 68.6% | 218.9% |
| Comparative Example 7 | 10,000 | 18.4% | 81.6% | 443.5% |

Referring to FIG. 3 and Table 2, it can be confirmed that, in Example 1, LiBO₂ was formed on the particle surface by an appropriate amount of boron coating. In contrast, in Comparative Example 1, because boron coating was not performed, the corresponding peak did not appear.

In addition, in the case of Comparative Examples 6 and 7, it can be confirmed that not only LiBO₂ but also a BO₃ compound was formed due to an increase in the boron coating amount. It is considered that this causes deterioration of battery performance because the content of boron oxide, which is a form of boron compound undesirable for battery performance, increases.

### Evaluation Example 3: Evaluation and Analysis of Electrochemical Characteristics

### (1) Evaluation of Initial Capacity and Initial Efficiency

After lithium secondary battery half cells were manufactured and aged at 45°C for 12 hours, a charge/discharge test was performed at 25°C. For initial capacity evaluation, 200 mAh/g was used as a reference capacity, and charging was performed to 4.7 V at a constant current of 0.1 C. After charging, a rest time of 20 minutes was provided, and discharge was performed to 2.5 V at a constant current of 0.1 C based on a reference capacity of 200 mAh/g, and the measurement results are shown in Table 3 below.

### (2) Evaluation of Output Characteristics

Next, each battery was charged under the same conditions as described above, and thereafter discharged at a constant current of 2C and 0.2C, respectively, until the battery voltage reached 2.5 V, thereby obtaining discharge capacities at 2C and 0.2C. The ratio of the discharge capacity at 2C to the discharge capacity at 0.2C (2C/0.2C discharge capacity ratio) was expressed as a percentage (%) to evaluate output characteristics of the battery, and the results are shown in Table 3 below.

### (3) Evaluation of High-Temperature Lifespan Characteristics (45°C, 50 cycles)

After lithium secondary battery half cells were manufactured, at 45°C, charging was performed to 4.5 V at a constant current of 0.5 C. After charging, a rest time of 20 minutes was provided, and discharge was performed to 2.5 V at a constant current of 0.5 C. Charging and discharging were performed 50 times under such charge/discharge cycle conditions, and a capacity retention rate of the 50th cycle relative to the first cycle was calculated, and the results are shown in Table 3 below.

**[Table 3]**

| | First Cycle (0.1C) | | | Output Characteristics | Lifespan Characteristics |
|---|---|---|---|---|---|
| | Charge Capacity (mAh/g) | Discharge Capacity (mAh/g) | Initial Efficiency (%) | 2C Discharge Capacity/0.2C Discharge Capacity (%) | 1st Discharge Capacity/50th Discharge Capacity |
| Example 1 | 281.2 | 251.0 | 89.3 | 88.9% | 98.5 |
| Example 2 | 273.1 | 245.0 | 89.7 | 87.1% | 95.2 |
| Comparative Example 1 | 270.8 | 218.9 | 80.8 | 85.6% | 96.6 |
| Comparative Example 2 | 275.3 | 228.5 | 83.0 | 86.3% | 95.1 |
| Comparative Example 3 | 268.2 | 218.5 | 81.5 | 86.6% | 97.5 |
| Comparative Example 4 | 264.9 | 226.5 | 85.5 | 88.7% | 94.2 |
| Comparative Example 5 | 269.1 | 230.1 | 85.5 | 88.5% | 93.8 |
| Comparative Example 6 | 261.3 | 219.6 | 84.0 | 88.3% | 91.5 |
| Comparative Example 7 | 255.8 | 212.8 | 83.2 | 87.9% | 89.1 |

Referring to Table 3 above, in the Examples in which the B content satisfies the range of the present invention, it can be confirmed that the initial discharge capacity and initial efficiency are excellent, and output characteristics and lifespan characteristics are also excellent at the same time.

In contrast, in Comparative Example 1, in which a B-containing coating layer is not formed, and Comparative Examples 2 to 5, in which the B content is outside the range of the present invention, it can be confirmed that initial charge and discharge capacities and initial efficiency are significantly deteriorated compared with the Examples.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising a lithium metal oxide including:
a core portion including manganese, nickel, and cobalt; and
a boron-containing coating layer positioned on an outer surface of the core portion,
wherein the lithium metal oxide is represented by the following Chemical Formula 1:
[Chemical Formula 1] Li₁₊ₓNiₐCo_{b}Mn_{c}B_{d}MₑO_{2-y}D_{y}
wherein, in Chemical Formula 1, 0.1≤x≤0.15, 0.20≤a≤0.35, 0.05≤b≤0.15, 0.4≤c≤0.55, 0≤d≤0.1, 0.015≤y≤0.05, x+a+b+c+d+e=1, M is one or more selected from Al, Ti, Nb, Ta, W, Zr, Y, Mg, Sc, Si, V, Fe, Mo, Ce, Hf, La, Sr, Sn, Sb, Zn, Cu, Ge, Mo, Ru, and Ir, and D is one or more selected from F, Cl, Br, and I.

2. The positive electrode active material for a lithium secondary battery of claim 1,
wherein the lithium metal oxide includes boron in an amount of 0.05 wt% to 2.0 wt% based on a total weight of the lithium metal oxide.

3. The positive electrode active material for a lithium secondary battery of claim 2,
wherein the lithium metal oxide includes boron in an amount of 0.05 wt% to 2.0 wt% based on a total weight of the lithium metal oxide.

4. The positive electrode active material for a lithium secondary battery of claim 1,
wherein the coating layer comprises lithium boron oxide (LiBO₂).

5. The positive electrode active material for a lithium secondary battery of claim 1,
wherein, in XPS (X-ray Photoelectron Spectroscopy), an amount of boron contained in a thickness region from an outermost surface of a surface of the lithium metal oxide to a depth of 10 nm is 85% or more of a total boron content in the lithium metal oxide.

6. The positive electrode active material for a lithium secondary battery of claim 1,
wherein a thickness of the coating layer is 1 nm to 100 nm.

7. The positive electrode active material for a lithium secondary battery of claim 1,
wherein the lithium metal oxide has a crystallite size analyzed by XRD analysis of 40 nm to 70 nm.

8. The positive electrode active material for a lithium secondary battery of claim 1,
wherein the positive electrode active material has an average particle diameter (D50) of 2.0 µm to 15.0 µm.

9. A method for manufacturing a positive electrode active material for a lithium secondary battery, comprising:
preparing a metal precursor including manganese, nickel, and cobalt;
dry-mixing the metal precursor, a lithium raw material, and a halogen raw material and then calcining the same to form a lithium metal oxide; and
mixing the lithium metal oxide and a boron raw material and heat-treating the same,
wherein the heat treatment is performed at a temperature of 250°C to 350°C.

10. The method for manufacturing a positive electrode active material for a lithium secondary battery of claim 9,
wherein, in mixing the lithium metal oxide and the boron raw material and heat-treating the same,
the heat treatment is performed for 1 hour to 10 hours.

11. The method for manufacturing a positive electrode active material for a lithium secondary battery of claim 9,
wherein mixing the lithium metal oxide and the boron raw material and heat-treating the same is performed in dry air, in an air atmosphere from which carbon dioxide has been removed, or in an oxygen atmosphere.

12. The method for manufacturing a positive electrode active material for a lithium secondary battery of claim 9,
wherein, in dry-mixing the metal precursor, the lithium raw material, and the halogen raw material and then calcining the same to form the lithium metal oxide,
the calcination is performed at a temperature of 700°C to 950°C.

13. A positive electrode for a lithium secondary battery, comprising:
a current collector; and
a positive electrode active material layer positioned on at least one surface of the current collector and comprising the positive electrode active material for a lithium secondary battery of any one of claims 1 to 8.

14. A lithium secondary battery comprising the positive electrode for a lithium secondary battery of claim 13.
